# Europäisches Patentamt

# European Patent Office

# Office européen des brevets

(19)

(11) Veröffentlichungsnummer : **0 444 235 B1**

(12)                    **EUROPÄISCHE PATENTSCHRIFT**

(45) Veröffentlichungstag der Patentschrift :
**16.09.92 Patentblatt 92/38**

(51) Int. Cl.⁵ : **G01N 21/53,** G01N 21/15

(21) Anmeldenummer : **90104133.5**

(22) Anmeldetag : **02.03.90**

(43) Veröffentlichungstag der Anmeldung :
**04.09.91 Patentblatt 91/36**

(45) Bekanntmachung des Hinweises auf die
Patenterteilung :
**16.09.92 Patentblatt 92/38**

(84) Benannte Vertragsstaaten :
**AT BE CH DE DK ES FR GB GR IT LI LU NL SE**

(56) Entgegenhaltungen :
**DE-A- 1 673 230**

(54) Vorrichtung zur Messung der Trübung von Rauchgas und bevorzugte Verwendung.

(56) Entgegenhaltungen :
**DE-A- 2 912 419**
**DE-A- 3 839 348**
**DE-B- 2 428 901**
**DE-C- 661 589**
**US-A- 3 323 409**

(73) Patentinhaber : **SIEMENS
AKTIENGESELLSCHAFT
Wittelsbacherplatz 2
W-8000 München 2 (DE)**

(72) Erfinder : **Stevens, Dirk, Dipl.-Ing.,
Finkenstrasse 4
W-8501 Veitsbronn, (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft eine Vorrichtung zur Messung der Trübung von Rauchgas, und eine bevorzugte Verwendung derselben.

Bei Vorrichtungen der obigen Art, welche meist nach dem optischen Prinzip arbeiten, ist eine Abstrahleinrichtung zur Erzeugung eines den Rauchgasstrom durchsetzenden Meßstrahles und eine in der Regel gegenüberliegende Empfangseinrichtung zur Auswertung der durch die Rauchgastrübung hervorgerufenen Abschwächung des Meßstrahles vorhanden. Hierbei besteht zum einen das Problem, daß zur Aufrechterhaltung einer gleichmäßigen Funktionsfähigkeit des Gerätes bei hoher Genauigkeit dafür Sorge getragen werden muß, daß zumindest die vom Meßstrahl durchsetzten Oberflächenbereiche auf der Abstrahl- und der Empfangseinrichtung nicht verschmutzen. Wird die Meßvorrichtung z.B. verwendet zur Überwachung der Abgase von insbesondere nach dem Diesel bzw. Zweitaktprinzip arbeitenden Verbrennungskraftmaschine, so wird die Rauchgastrübung hauptsächlich durch feinste, verteilte Rußpartikel hervorgerufen. Der Rauchgasstrom bzw. die Rußpartikel sind nicht immer vollständig trocken, sondern u.U. mit Wasserdampf bzw. einem Ölnebel vermischt. Es besteht somit die Gefahr, daß die vom Meßstrahl durchsetzten Oberflächenbereiche auf der Abstrahl- und der Empfangseinrichtung innerhalb kürzester Zeit verschmutzen, und somit die Meßergebnisse verfälscht werden. Es besteht auch die Gefahr, daß sich die Rußpartikel aufgrund von elektrostatischer Anziehung auf den insbesondere aus Glas bestehenden Oberflächenbereichen der Abstrahl- und Empfangseinrichtung niederschlagen. Ferner kann im Rauchgas enthaltener Wasserdampf auf den Oberflächenbereichen kondensieren.

Meßvorrichtungen der obengenannten Art enthalten häufig ein Meßrohr, dem das Rauchgas über eine Sonde bevorzugt in der Rohrmitte zugeführt wird. Das Rauchgas durchströmt dabei meist zumindest in Form einer Nebenströmung das Meßrohr.

Hierbei sind zumindest zwei Prinzipien der Rauchgasführung bekannt. Bei einer ersten, nach dem sogenannten Vollstromprinzip arbeitenden Vorrichtung, tritt das Rauchgas geradlinig, d.h. ohne jegliche Umlenkungen, durch einen sogenannten Vollstromadapter hindurch und kann an dessen Ende unbehindert ins Freie entweichen. Das Meßrohr ist bevorzugt in einem Winkel von 90° so mit dem Vollstromadapter verbunden, daß der Meßstrahl zwischen Abstrahl- und Empfangseinrichtung die Rauchgashauptströmung durch den Vollstromadapter durchsetzt. In der Regel breiten sich auch sogenannte Rauchgasnebenströmungen durch das Meßrohr selbst aus, und gelangen an einem bzw. beiden Enden des Meßrohres ins Freie. Bei einer zweiten, nach dem sogenannten Teilstromprinzip arbeitenden Vorrichtung wird das Rauchgas über eine sogenannte Teilstromsonde dem Meßrohr bevorzugt in der Rohrmitte zugeführt. Hierdurch wird der Rauchgasstrom in zwei separate, auf die Meßrohrenden gerichtete Rauchgasströme aufgeteilt.

Das Rauchgas wird somit nicht am Ende des Rauchgaserzeugers selbst, z.B. einer Kamin- bzw. Auspuffeinrichtung, bzw. nach dessen freiem Austritt in die Atmosphäre untersucht, sondern muß speziell ausgebildete Strömungskanäle einer Meßvorrichtung durchqueren, welche bevorzugt unmittelbar an dem Rauchgasaustritt des Rauchgaserzeugers angeordnet sind. Hierdurch wird der Strömung ein zusätzlicher Strömungswiderstand entgegengesetzt, welcher insbesondere bei kleinen bzw. pulsartig wechselnden Strömungsgeschwindigkeiten auf den Rauchgaserzeuger selbst zurückwirkt. Ein derartiger Rückstau kann aber zumindest die Funktionsfähigkeit des Rauchgaserzeugers beeinträchtigen. Wird die Meßvorrichtung beispielsweise zur Überwachung der Abgase von Verbrennungskraftmaschinen eingesetzt, so müssen insbesondere bei nach dem Diesel-Prinzip arbeitenden und mit einem Abgasturbolader versehenen Verbrennungskraftmaschinen derartige Abgasrückstauungen vermieden werden. Es muß somit dafür gesorgt werden, daß das zu überwachende Rauchgas sowohl bei niedrigen als auch hohen Strömungsgeschwindigkeiten, und auch beim Auftreten von plötzlichen starken Strömungsgeschwindigkeitsänderungen, die Meßvorrichtung in jedem Fall rückstaufrei durchqueren und an deren Ende in die Umgebung austreten kann.

Aus dem deutschen Patent 66l 589 ist ein Rauchdichtemesser bekannt. Dieser enthält ein T-förmiges, inneres Ansaugrohr zur Entnahme eines auf den Gehalt an festen Bestandteilen zu überprüfenden Rauchgases. Das Ansaugrohr ist von einem ebenfalls T-förmigen, äußeren Absaugrohr umgeben, in dem das Rauchgas zur Entnahmestelle rückgeführt wird. Die offenen Enden des inneren Ansaugrohres liegen im Inneren von Trichtern, welche die offenen Enden des äußeren Absaugrohres verengen. Die offenen Enden der beiden ineinanderliegenden Rohre sind somit als Ansaugdüsen ausgebildet. An diesen offenen Enden der übereinanderliegenden Rohre sind gegenüberliegend je eine Strahlungsquelle und ein Thermoelement in einem separaten Gehäuse angeordnet. Zum Strahlungseintritt- bzw. Austritt in bzw. aus dem jeweiligen Gehäuse ist je eine Linse vorgesehen, welche von je einem konischen Rohr umgeben ist. Dieses ragt in die jeweilige Ansaugdüse am entsprechenden Ende der ineinanderliegenden Rohre. Aufgrund des Unterdruckes des Rauchgases im äußeren Absaugrohr wird hierüber Kesselhausluft angesaugt. Hierdurch werden die Rauchgase vom inneren in das äußere Rohr umgeleitet und gleichzeitig eine verschmutzungshemmende Spülluftströmung aus dem Inneren des jeweiligen Gehäuses um die Linsen herum angesaugt.

Der Erfindung liegt die Aufgabe zugrunde, eine Meßvorrichtung anzugeben, bei der die oben angegebenen Probleme auf besonders vorteilhafte Weise überwunden werden. Insbesondere soll unabhängig von der aktuelle Strömungsgeschwindigkeit des Rauchgases und möglicher plötzlicher Geschwindigkeitsänderungen in jedem Fall sowohl eine Verschmutzung der vom Meßstahl durchsetzten Oberflächenbereiche ausgeschlossen sein, als auch gleichzeitig eine Abförderung des Rauchgases aus dem Meßrohr ohne Beeinträchtigung von dessen natürlichem Strömungsverhalten, d.h. rückstauund verdünnungsfrei, möglich sein.

Die Aufgabe wird gelöst mit Hilfe der in Anspruch I angegebenen Vorrichtung. Bevorzugte Ausführungsformen der Erfindung und eine bevorzugte Verwendung sind in den Unteransprüchen angegeben.

Die erfindungsgemäße Vorrichtung enthält Zweite Mittel zur Aufteilung des Spülluftstromes, welche so gestaltet sind, daß ein innerer Spülluftstrom zumindest den vom Meßstrahl durchsetzten Oberflächenbereich auf der Abstrahl- bzw. Empfangseinrichtung jeweils vom Rand zum Zentrum gerichtet umströmt. Hierdurch wird besonders vorteilhaft eine den optisch aktiven Oberflächenbereich der Abstrahl- bzw. Empfangseinrichtung umspülender und davon weggerichteter Spülluftstrom erzeugt. Hiermit kann eine Verschmutzung der optisch aktiven Oberflächenbereiche selbst dann vermieden werden, wenn der Rauchgasstrom nahezu direkt frontal auf den jeweils vom Meßstrahl durchsetzten Oberflächenbereich der Abstrahl- bzw. Empfangseinrichtung gerichtet ist.

Gemäß einer vorteilhaften Ausführungsform der Erfindung enthalten die Zweiten Mittel zur Aufteilung des Spülluftstromes eine Luftleitkappe. Diese umfaßt jeweils den vom Meßstrahl durchsetzten Oberflächenbereich der Abstrahl- bzw. Empfangseinrichtung zumindest teilweise so, daß der anströmende Spülluftstrom möglichst radialsymmetrisch vom Randbereich auf das Zentrum des Oberflächenbereiches gelenkt wird, und von dort um die Achse des Meßstrahles herum abströmt. Eine derartige, von der Spülluft hinterströmte und gemäß einer weiteren Ausführungsform bevorzugt einen rotationssymmetrischen Strömungshohlkörpers bildende Luftleitkappe hat den besonderen Vorteil, daß eine gleichmäßig verteilte, radialsymmetrische und möglichst auf die optische Achse des Meßstrahles gerichtete Spülluftströmung nahezu unmittelbar auf der Oberfläche des vom Meßstrahl durchsetzten Oberflächenbereiches erzeugt wird. Ist zudem die Luftleitkappe auf einer der Zuführung der Spülluft abgewandten Seite bevorzugt ringförmig stark verengt, so wird die von hinten anströmende Spülluft bei ihrem Austritt um die optische Achse des Meßstrahles herum strahlförmig gebündelt. Dieser abströmende Spülluftstrahl ist dem anströmenden Rauchgas bevorzugt direkt entgegengerichtet. Hierdurch wird eine Verschmutzung der vom Meßstrahl durchgesetzten Oberflächenbereiche selbst bei sehr großen Rauchgasströmungsgeschwindigkeiten mit Sicherheit verhindert. Eine derartige Luftleitkappe schirmt zudem den jeweiligen Oberflächenbereich zumindest im Randbereich auch direkt mechanisch vor dem anströmenden Rauchgas ab.

Bei einer weiteren, besonders vorteilhaften Ausführungsform der Erfindung enthalten die Zweiten Mittel zur Aufteilung des Spülluftstromes eine Luftleithülse. Diese umfaßt jeweils zumindest die Abstrahl- und die Empfangseinrichtung so, daß der Spülluftstrom in Richtung auf dem vom Meßstrahl durchsetzten Oberflächenbereich von hinten zugeführt wird. Eine derartige, bevorzugt ebenfalls einen rotationssymmetrischen Strömungshohlkörper bildende Luftleithülse hat den besonderen Vorteil, daß die Spülluftströmung schon von Erreichen des vom Meßstrahl durchsetzten Oberflächenbereiches die jeweilige Abstrahl- bzw. Empfangseinrichtung der Meßvorrichtung möglichst tangential umströmt. Dies ist insbesondere dann von Vorteil, wenn die Abstrahl- bzw. die Empfangseinrichtung selbst einen zylindrisch gestreckten Körper aufweist, dessen eines Ende den vom Meßstrahl durchsetzten Oberflächenbereich bildet. Durch Verwendung der Luftleithülse kann der Spülluftstrom dem zylindrischen Körper an einem dem optisch aktiven Oberflächenbereich entgegengesetzten Ende von hinten zugeführt werden. Hierdurch wird eine direkt auf den sauberzuhaltenden, optisch aktiven Oberflächenbereich und die Luftleitkappe gerichtete, konzentrierte Spülluftströmung erreicht. Desweiteren wird die Spülluftströmung durch die Luftleithülse so lange vor einer Durchmengung mit dem Rauchgas abgeschirmt, bis die Spülluft nach der die Reinigungswirkung erzeugenden Umströmung des optisch aktiven Oberflächenbereiches von diesem weggerichtet abströmt.

Das Vorhandensein von Luftleithülsen um die Abstrahl- und die Empfangseinrichtung herum hat desweiteren den besonderen Vorteil, daß diese unabhängig voneinander den zur Sauberhaltung ihres optisch aktiven Oberflächenbereiches notwendigen Spülluftstrom selbst erzeugen können. Hierzu enthalten die Mittel zur Erzeugung des Spülluftstromes gemäß einer weiteren Ausführung der Erfindung je einen, hinter der Abstrahl- bzw. Empfangseinrichtung bevorzugt direkt an der jeweiligen Luftleithülse angebrachten Ventilator. Die Abstrahl- und die Empfangseinrichtung bilden somit gemeinsam mit der dazugehörigen Luftleitkappe, der Luftleithülse und dem Ventilator jeweils eine separate Baueinheit. Diese erzeugt den notwendigen Spülluftstrom autark insbesondere durch Direktentnahme von Frischluft aus der Umgebung mit Hilfe des jeweiligen Ventilators.

Verfügt die Meßvorrichtung über ein Meßrohr, dem das Rauchgas über eine Sonde bevorzugt in der Rohrmitte zugeführt wird, so so können die obengenannten, jeweils eine separate Baueinheit bildenden Abstrahl- bzw. Empfangseinrichtungen unmittelbar direkt an den beiden, bevorzugt gegenüberliegenden Austrittsenden des Meßrohres angebracht werden. Hierdurch kann zum einen auf weitere Gehäusekörper zur Führung des Rauchgases bzw. der Spülluftströmungen verzichtet werden. Desweiteren ist der Rauchgasstrom insbesondere bei einer nach dem sogenannten Teilstromprinzip arbeitenden Meßvorrichtung zur Erhöhung der Meßgenauigkeit so gerichtet, daß er möglichst auf das Zentrum des vom Meßstrahl durchsetzten Oberflächenbereiches auf der Abstrahl- bzw. Empfangseinrichtung zuströmt.

Bei einer weiteren, besonders vorteilhaften Ausführungsform der Erfindung umfaßt die jeweilige Luftleithülse, bevorzugt trichterförmig erweitert, das zugewandte Austrittsende des Meßrohres und bildet somit einen direkten Rauchgasaustritt in die Atmosphäre. Durch eine derartige Anordnung wird die der jeweiligen Abstrahl- bzw. Empfangseinrichtung bevorzugt tangential von hinten zugeführte Spülluftströmung in zwei Teilströmungen aufgeteilt. Die eine Teilströmung hinterspült die jeweilige Luftleitkappe und verhindert somit in der gewünschten Weise durch möglichst radialsymmetrische Umströmung die Verschmutzung des optisch aktiven Oberflächenbereiches. Die zweite Teilströmung dagegen läuft an der Luftleitkappe vorbei und tritt über die bevorzugt trichterförmig erweiterte Öffnung der Luftleithülse in die Atmosphäre aus. Aufgrund der Erweiterung des dem Austrittsende des Meßrohres zugewandten Endes der Luftleithülse wird von dieser Teilströmung ein Unterdruck in der Luftleithülse erzeugt. Hierdurch wird der auf den vom Meßstrahl durchsetzten Oberflächenbereich zuströmende Rauchgasstrom aus dem Zwischenraum zwischen dem Austrittsende des Meßrohres und der diesen umfassenden Erweiterung der Leithülse selbst bei niedrigen Rauchgasströmungsgeschwindigkeiten mit Sicherheit ohne Rückstau in die Umgebung abgefördert.

Die Erfindung wird desweiteren mit Hilfe der nachfolgend kurz angeführten Figuren näher erläutert. Dabei zeigt:

FIG I beispielhaft eine in Form einer separaten Baueinheit ausgeführte Abstrahleinrichtung zur Erzeugung eines den Rauchgasstrom durchsetzenden Meßstrahles mit einer erfindungsgemäßen Luftleitkappe und einer Luftleithülse,

FIG 2 die Abstrahleinrichtung von FIG I mit einer Luftleithülse, welche an einem dem Austrittsende des Meßrohres zugewandten Seite bevorzugt trichterförmig erweitert ist,

FIG 3 eine nach dem "Teilstromprinzip" arbeitende Meßvorrichtung in perspektivischer Darstellung,

FIG 4 eine nach dem "Vollstromprinzip" arbeitende Meßvorrichtung in perspektivischer Darstellung, und

FIG 5 eine nach dem "Teilstromprinzip" arbeitende Meßvorrichtung in Schnittdarstellung.

In FIG I ist beispielhaft eine Abstrahleinrichtung MSK zur Erzeugung eines den Rauchgasstrom RS durchsetzenden Meßstrahles MS dargestellt. Diese enthält eine bevorzugt aus einem zylindrischen Körper bestehende Sendeoptik SO, die beispielsweise eine Sendediode SD und eine Strahlungsoptik ST zur Fokussierung des Lichtstrahles enthält. Der vom Meßstrahl durchsetzte Oberflächenbereich an dem einen Ende des Körpers der Sendeoptik wird bevorzugt durch ein planparalleles Frontglas FF gebildet. Die in FIG I beispielhaft dargestellte Abstrahlvorrichtung erzeugt einen optischen Lichtstrahl im sichtbaren oder im infraroten Wellenlängenbereich. Es ist dabei ohne Einschränkung möglich, auch eine nach einem anderen physikalischen Prinzip arbeitende, einen nicht optischen, z.B. radiometrischen, Meßstrahl erzeugende Vorrichtung im Inneren der Abstrahleinrichtung MSK unterzubringen.

Erfindungsgemäß ist der vom Meßstrahl durchsetzte Oberflächenbereich FF zumindest teilweise von einer Luftleitkappe LK umfaßt. Diese lenkt den bevorzugt von hinten zugeführten Spülluftstrom SL so, daß dieser den Oberflächenbereich FF möglichst radialsymmetrisch vom Randbereich auf das Zentraum gerichtet umströmt, und von dort möglichst um die Achse OA des Meßstrahles herum abströmt. In der in der FIG I dargestellten bevorzugten Ausführungsform ist die Luftleitkappe LK symmetrisch zur Achse OA des Meßstrahles angeordnet. Sie stellt einen rotationssymmetrischen Strömungshohlkörper dar, der von hinten mit Spülluft SL angeströmt wird und diese an den Kanten des bevorzugt zylindrischen Körpers der Sendeoptik SO möglichst radialsymmetrisch auf das näherungsweise mit der optischen Achse OA zusammenfallende Zentrum des Frontglases FF umlenkt. Die Luftleitkappe ist bevorzugt auf der, der Zuführung der Spülluft SL abgewandten Seite ringförmig stark verengt. Durch eine im Bereich des Zentrums des Frontglases befindliche Öffnung in der Luftleitkappe strömt die Spülluft SL bevorzugt in Form eines gebündelten Strahles in einer vom Oberflächenbereich FF abgewandten Richtung ab. Dies hat den Vorteil, daß selbst in dem in der FIG I dargestellten Fall, bei dem der Rauchgasstrom RS nahezu direkt auf das Zentrum des vom Meßstrahl MS durchsetzten Oberflächenbereiches FF gerichtet ist, eine Verschmutzung des Frontglases FF aufgrund der gegeneinander gerichteten Strömungen der Spülluft SL und des Rauchgases RS verhindert wird.

Bei der in FIG I dargestellten Ausführungsform der erfindungsgemäßen Meßvorrichtung ist desweiteren eine Luftleithülse SLH vorhanden. Diese umfaßt den restlichen Bereich des bevorzugt zylindrischen Körpers der Sendeoptik SO und stößt bevorzugt zwischen raumfrei direkt an die Luftleitkappe LK an. Mit Hilfe einer derartigen Luftleithülse kann der Spülluftstrom insbesondere unbeeinträchtigt von dem auf die Abstrahleinrichtung MSK gerichteten Rauchgasstrom RS von hinten zugeführt werden. Gemäß einer weiteren Ausführungsform ist an dem, dem optisch aktiven Oberflächenbereich FF abgewandten Ende des bevorzugt zylindrischen Körpers der Sendeoptik SO ein Ventilator V mit einem Ventilatormotor VM und Ventilatorflügeln VF angeordnet. Das offene Ende des Ventilators dient dabei unmittelbar als Spüllufteintritt SE.

Die in der FIG I dargestellte, besonders vorteilhafte und erfindungsgemäß aus einer Luftleitkappe LK, einer Luftleithülse SLH und einem direkt angeflanschten Ventilator V bestehende Abstrahleinrichtung MSK bildet eine kompakte, autarke Baueinheit. Ein derartiger Meßsendekopf MSK erzeugt den zur Reinhaltung des vom Meßstrahl MS durchsetzten Oberflächenbereiches FF benötigten Spülluftstrom SL auf besonders einfache Weise, ohne daß hierzu aufwendige Gehäuse und weitere Strömungskörper notwendig sind. Zudem kann die Spülluft dem Körper der Sendeoptik SO bevorzugt tangential von hinten so zugeführt werden, daß sich nach Umlenkung mit Hilfe der Luftleitkappe LK eine optimale und ein Höchstmaß an Reinhaltung des Frontglases FF sicherstellende radiale Umströmung der Sendeoptik ergibt.

Aufgrund der Kompaktheit des sich erfindungsgemäß ergebenden Sendekopfes MSK ist es besonders vorteilhaft möglich, diesen bevorzugt mittels Schraubbolzen B unmittelbar an einem Austrittsende AEI eines vom Rauchgas RS durchströmten Meßrohres MR anzubringen. Gemäß der Darstellung von FIG I ist somit die Rauchgasströmung RS unmittelbar auf das Frontglas FF der Sendeoptik SO gerichtet. Dementgegen wirkt der aus der Öffnung um die optische Achse OA in der Luftleithülse LK austretende Spülluftstrom SL. Beide Strömungen treffen im Zwischenraum zwischen dem MeßsendekopF MSK und dem Austrittsende AEI des Meßrohres MR aufeinander und treten radial nach außen gerichtet in die Umgebung aus. Dieser Zwischenraum ist somit ein in der FIG I mit Pfeilen dargestellten Austritt RA für das Rauchgas.

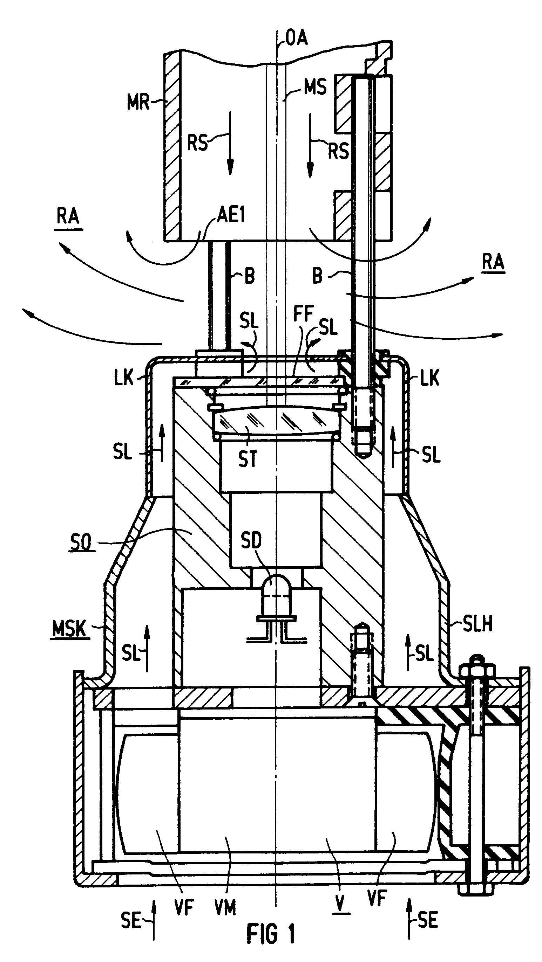

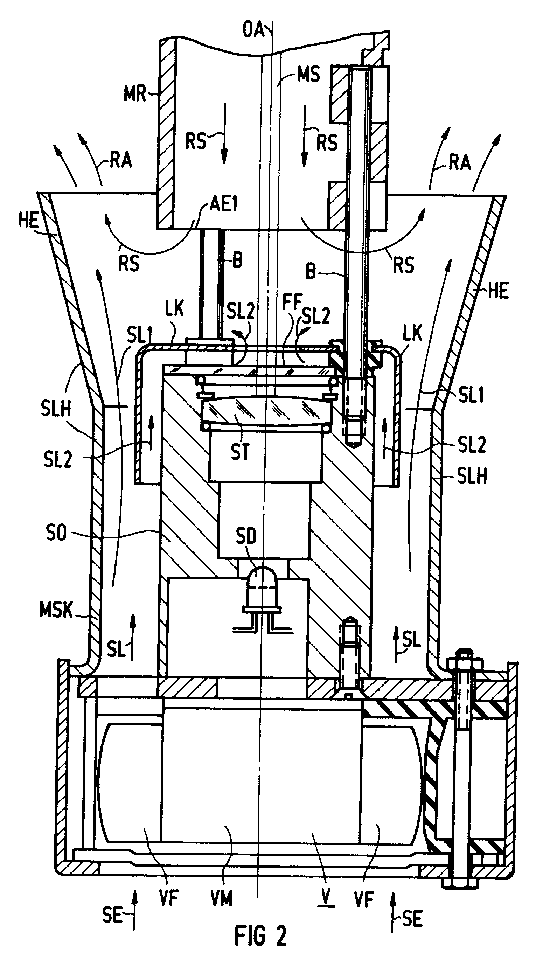

FIG 2 zeigt eine weitere vorteilhafte Ausführungsform der erfindungsgemäßen Vorrichtung. Im Gegensatz zur Ausführung von FIG I ist hierbei das dem Austrittsende AEI des Meßrohres MR zugewandte Ende HE bevorzugt trichterförmig erweitert. Eine derartig aufgebaute Luftleithülse umfaßt somit nicht nur den Körper der Sendeoptik SO, sondern zumindest auch den Raum zwischen der Sendeoptik SO und dem Austrittsende AEI des Meßrohres MR. Es ist somit durch das erweiterte Hülsenende HE gerade der Bereich umschlossen, in dem die beiden aufeinander gerichteten Strömungen des Rauchgases RS und des Spülluftstromes SL aufeinander treffen. In diesem Fall bildet also das erweiterte Hülsenende HE einen Austritt für das Rauchgas RA.

Bei der Luftleithülse von FIG 2 wird der bevorzugt über den Ventilator V von hinten zugeführte Spülluftstrom SL bei Auftreffen auf die Luftleitkappe LK in einen äußeren und einen inneren Spülluftstrom SLI, SL2 aufgeteilt. Der innere Spülluftstrom SL2 hinterspült dabei in der obenbeschriebenen Weise die Luftleitkappe LK und dient zur Verhinderung der Verschmutzung des Frontglases FF. Der äußere Spülluftstrom SLI dagegen entweicht durch das erweiterte Hülsenende HE unmittelbar über den Rauchgasaustritt RA in die Atmosphäre. Aufgrund der Erweiterung des Endes HE der Luftleithülse SLH erzeugt der äußere Spülluftstrom SLI bei seinem Austritt einen Unterdruck. Dieser sorgt erfindungsgemäß dafür, daß insbesondere auch bei sehr niedrigen Geschwindigkeiten der aus dem Austrittsende AEI des Meßrohres MR austretenden Rauchgasströmung RS diese in jedem Fall rückstaufrei über den Rauchgasaustritt RA in die Umgebung abgefördert wird. Die erfindungsgemäße Vorrichtung gemäß der FIG 2 hat somit den besonderen Vorteil, daß mit Hilfe einer einzigen, zugeführten Spülluftströmung SL sowohl eine vollständige Sauberhaltung des vom Meßstrahl durchsetzten Oberflächenbereiches FF der Abstrahleinrichtung, als auch eine rückstaufreie Abförderung des Rauchgases RS aus der gesamten Meßvorrichtung bewerkstelligt wird.

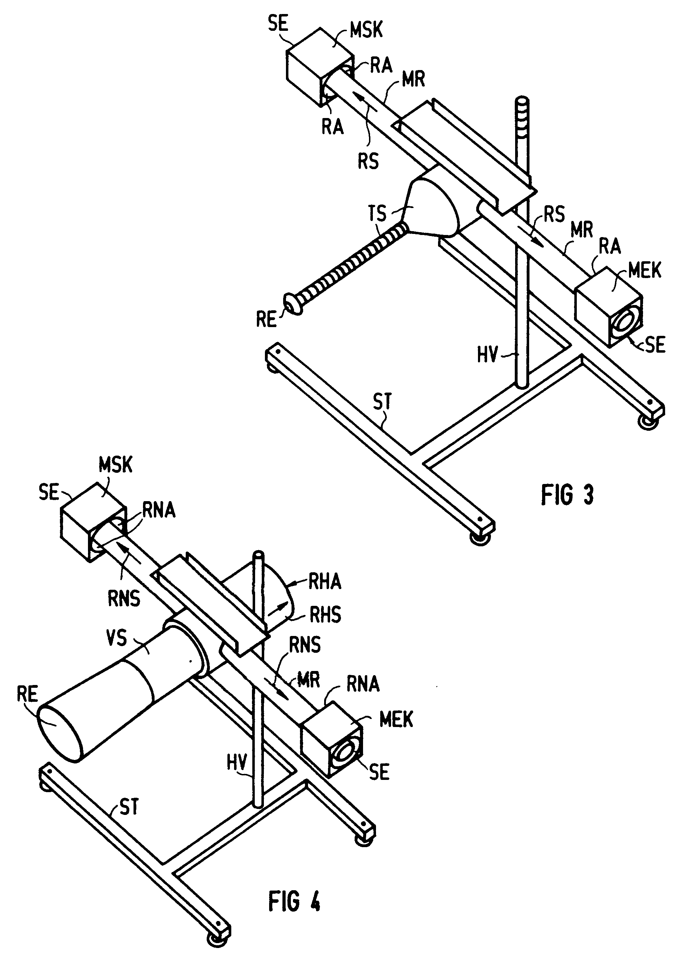

In FIG 3 ist beispielhaft eine nach dem sogenannten Teilstromprinzip arbeitende Vorrichtung zur Messung der Trübung von Rauchgas perspektivisch dargestellt, welche über je einen erfindungsgemäß ausgeführten Meßsendekopf MSK und einen Meßempfangskopf MEK verfügt. Die gesamte Meßvorrichtung ist über eine höhenverstellbare Haltevorrichtung HV an einem Ständer ST angebracht. Sie besteht im wesentlichen aus einem Meßrohr MR, dem bevorzugt in der Rohrmitte über eine sogenannte Teilstromsonde TS das zu überprüfende Rauchgas zugeführt wird. Wird die Meßvorrichtung beispielsweise zur Überprüfung der Abgase von Kraftfahrzeugen verwendet, so wird ein an der Teilstromsonde TS befindlicher und als Rauchgaseintritt RE dienender flexibler Anschlußschlauch in den Abgasstutzen des Kraftfahrzeuges eingeführt. Das hierdurch dem Meßrohr MR zugeführte Rauchgas teilt sich in zwei Strömungen RS auf, welche auf den an je einem der beiden gegenüberliegenden Austrittsenden des Meßrohres angebrachten Meßsendekopf MSK bzw. Meßempfangskopf MEK zulaufen. Erfindungsgemäß dient der bevorzugt trichterförmig erweiterte Bereich des Meßsendekopfes bzw. Meßempfangskopfes, welcher das jeweilige Ende des Meßrohres umfaßt, als Rauchgasaustritt RA. Desweiteren dient das dem Rauchgasaustritt gegenüberliegende Ende eines jeden Meßkopfes als Spüllufteintritt SE.

In der FIG 4 ist eine entsprechende, nach dem sogenannten Vollstromprinzip arbeitende Meßvorrichtung dargestellt. Auch hier sind an den Enden eines Meßrohres MR jeweils ein gemäß der Erfindung aufgebauter Meßsendekopf MSK bzw. Meßempfangskopf MEK angebracht. Das Rauchgas wird hierbei über einen Rauchgaseintritt RE in einen sogenannten Vollstromadapter VS geleitet. Dieser durchquert das Meßrohr MR nahezu in der Mitte und bevorzugt unter einem Winkel von 90°. Der Großteil des Rauchgases durchquert den Vollstromadapter VS in Form einer Hauptströmung RHS, welche an dessen Ende über einen Rauchgas-Hauptaustritt RHA unbehindert in die Atmosphäre austritt. An den Verbindungsstellen des Vollstromadapters mit dem Meßrohr wird je eine Rauchgas-Nebenströmung RNS abgezweigt, welche im Meßrohr MR auf die beiden gegenüberliegend an den Meßrohrenden angebrachten Meßköpfe MSK und MEK zuläuft. Hierbei dienen wiederum die erfindungsgemäß bevorzugt trichterförmig erweiterten und das jeweilige Ende des Meßrohres MR umfassenden Enden des jeweiligen Meßkopfes als ein Rauchgas-Nebenaustritt RNA.

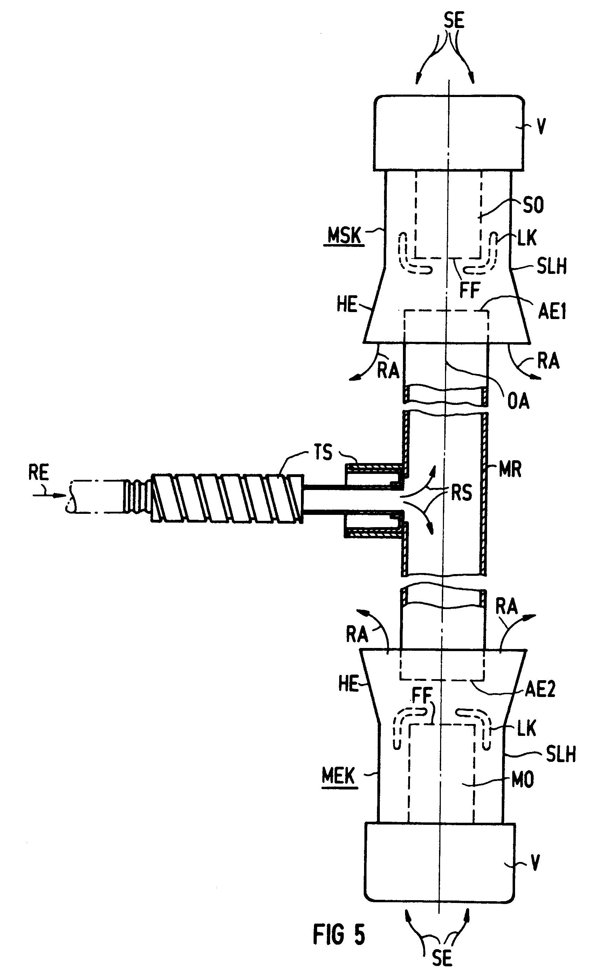

FIG 5 zeigt schließlich eine nach dem Teilstromprinzip arbeitende Meßvorrichtung in Schnittdarstellung. Das Rauchgas wird dabei dem Meßrohr MR bevorzugt in der Mitte über eine Teilstromsonde TS und einen als Rauchgaseintritt RE dienenden, bevorzugt flexiblen Anschlußschlauch zugeführt. Im Meßrohr teilt sich der Rauchgasstrom auf in jeweils einen auf die gegenüberliegenden Austrittsenden AEl, AE2 zulaufenden Teilströmungen. Erfindungsgemäß ist jedes Austrittsende des Meßrohres vom bevorzugt trichterförmig erweiterten Ende HE der Luftleithülse SLH eines Meßsende- bzw. Meßempfangskopfes unter Bildung eines direkten Rauchgasaustrittes RA umfaßt. In FIG 5 dient beispielsweise der obere Meßkopf als ein Meßsendekopf MSK, und der untere Meßkopf als ein Meßempfangskopf MEK. In beiden Meßköpfen ist jeweils mit strichlierter Linie der bevorzugt zylindrische Körper der jeweiligen Sendeoptik SO bzw. Meßoptik MO dargestellt. Desweiteren sind ebenfalls in strichlierter Linie die den jeweiligen optisch aktiven Oberflächenbereich FF zumindest teilsweise umfassenden Luftleitkappen LK dargestellt. Die Ventilatoren V an den Enden des jeweiligen Meßkopfes dienen zugleich als Spüllufteintritt SE. Die bevorzugt jeweils eine separate Baueinheit bildenden Meßköpfe erzeugen mit Hilfe der jeweiligen Ventilatoren getrennt voneinander gerade den Spülluftstrom SL, welcher am jeweiligen Austrittsende AEl, AE2 des Meßrohres MR benötigt wird, um zum einen eine Verschmutzung des Frontglases FF zu vermeiden, und zum anderen auch bei niedrigen Geschwindigkeiten des Rauchgasstromes RS eine ausreichende, rückstaufreie Abförderung über den Rauchgasaustritt RA zu gewährleisten.

Die erfindungsgemäße Vorrichtung ist besonders geeignet zur Verwendung bei der Messung der Partikelemission in den Abgasen von insbesondere nach dem Dieselprinzip arbeitenden, stationären oder in einem Fahrzeug befindlichen Verbrennungskraftmaschinen. Generell kann aber die erfindungsgemäße Vorrichtung uneingeschränkt auch zur Messung der Trübung von andersartig erzeugtem Rauchgas, z.B. in einer Hausbrand-Heizungsanlage, verwendet werden.

## Patentansprüche

1. Vorrichtung zur Messung der Trübung von Rauchgas, mit einer Abstrahleinrichtung (MSK,SO) zur Erzeugung eines den Rauchgasstrom (RS) durchsetzenden Meßstrahles (MS) und einer Empfangseinrichtung (MEK,MO) zur Auswertung der durch die Rauchgastrübung hervorgerufenen Abschwächung des Meßstrahles (MS), wobei sowohl die Abstrahl- als auch die Empfangseinrichtung enthält:
   a) erste Mittel (V) zur Erzeugung eines Spülluftstromes (SL), welcher der Abstrahl- bzw. Empfangseinrichtung (MSK,MEK) in Richtung auf den vom Meßstrahl (MS) jeweils durchsetzten Oberflächenbereich (FF) von hinten zugeführt wird, und
   b) zweite Mittel (LK,SLH,HE) zur Aufteilung des Spülluftstromes (SL) in einen inneren und äußeren Spülluftstrom (SLI, SL2) wobei
      bl) der innere Spülluftstrom (SL2) den vom Meßstrahl (MS) durchsetzten Oberflächenbereich (FF) auf der Abstrahl- bzw. Empfangseinrichtung (MSK,SO;MEK,MO) jeweils vom Rand zum Zentrum gerichtet umströmt, und
      b2) der äußere Spülluftstrom (SLI) im Bereich des jeweils vom Meßstrahl (MS) durchsetzten Oberflächenbereiches (FF) einen Unterdruck erzeugend direkt in die Atmosphäre entweicht.

2. Vorrichtung nach Anspruch I, **dadurch gekennzeichnet**, daß die zweiten Mittel eine Luftleitkappe (LK) enthalten, welche den jeweils den vom Meßstrahl (MS) durchsetzten Oberflächenbereich (FF) der Abstrahl- bzw. der Empfangseinrichtung (MSK,MEK) zumindest teilweise so umfaßt, daß der innere Spülluftstrom (SL2) als Teil des anströmenden Spülluftstromes (SL) möglichst radialsymmetrisch vom Randbereich auf das Zentrum des Oberflächenbereiches (FF) gelenkt wird, und von dort um die Achse (OA) des Meßstrahles (MS) herum abströmt.

3. Vorrichtung nach Anspruch 2, **dadurch gekennzeichnet**, daß die Luftleitkappe (LK) einen rotationssymmetrischen Strömungshohlkörper bildet, welcher möglichst symmetrisch zur Achse (OA) des Meßstrahles angeordnet und auf einer der Zuführung des inneren Spülluftstromes (SL2) abgewandten Seite bevorzugt ringförmig verengt ist.

**4.** Vorrichtung nach einem der vorangegangenen Ansprüche, **dadurch gekennzeichnet**, daß die zweiten Mittel eine Luftleithülse (SLH) enthalten, welche jeweils zumindest die Abstrahl- bzw. Empfangseinrichtung (SO,MO) so umfaßt, daß der Spülluftstrom (SL) in Richtung auf den vom Meßstrahl (MS) durchsetzten Oberflächenbereich (FF) von hinten zugeführt wird.

**5.** Vorrichtung nach Anspruch 4, **dadurch gekennzeichnet**, daß die Luftleithülse (SLH) einen rotationssymmetrischen Strömungshohlkörper bildet und möglichst symmetrisch zur Achse (OA) des Meßstrahles (MS) angeordnet ist.

**6.** Vorrichtung nach einem der vorangegangenen Ansprüche, **dadurch gekennzeichnet**, daß die ersten Mittel einen hinter der Abstrahl- bzw. Empfangseinrichtung (MSK,SO;MEK,MO) angebrachten Ventilator (V,VF,VM) enthalten.

**7.** Vorrichtung nach einem der vorangegangenen Ansprüche mit einem Meßrohr (MR), dem das Rauchgas (RS) über eine Sonde (TS, VS) bevorzugt in der Rohrmitte zugeführt wird, **dadurch gekennzeichnet**, daß die Abstrahl- und die Empfangseinrichtung unmittelbar an je einem Austrittsende (AEI,AE2) des Meßrohres (MR) so angebracht sind, daß der Rauchgasstrom (RS) möglichst auf das Zentrum des vom Meßstrahl (MS) durchsetzten Oberflächenbereiches (FF) gerichtet ist.

**8.** Vorrichtung nach einem der Ansprüche 4 bis 6 mit einem Meßrohr (MR), dem das Rauchgas (RS) über eine Sonde (TS,VS) bevorzugt in der Rohrmitte zugeführt wird, **dadurch gekennzeichnet**, daß die Abstrahl- und die Empfangseinrichtung unmittelbar an je einem Austrittsende (AEI,AE2) des Meßrohres (MR) so angebracht sind, daß der Rauchgasstrom (RS) möglichst auf das Zentrum des vom Meßstrahl (MS) durchsetzten Oberflächenbereiches (FF) gerichtet, und daß die jeweilige Luftleithülse (SLH) das zugewandte Austrittsende (AEI,AE2) des Meßrohres (MR) bevorzugt trichterförmig erweitert (HE) und einen direkten Rauchgasaustritt (RA) in die Atmosphäre bildend umfaßt.

**9.** Verwendung der Vorrichtung nach einem der vorangegangenen Ansprüche zur Messung der Partikelemission in den Abgasen von nach dem Dieselprinzip arbeitenden Verbrennungskraftmaschinen.

## Claims

**1.** A device for measuring the cloudiness of flue gas, with a radiating device (MSK, SO) for generating a measuring ray (MS) penetrating the flue gas flow (RS) and a receiving device (MEK,MO) for evaluating the attenuation of the measuring ray (MS) caused by the flue gas cloudiness, wherein the radiating device as well as the receiving device contain:
a) first means (V) for generating a flushing air current (SL), which is supplied from behind to the radiating device or receiving device (MSK,MEK) in the direction of the surface region (FF) penetrated in each case by the measuring ray (MS), and
b) second means (LK, SLH, HE) for dividing the flushing air current (SL) into an inner and an outer flushing air current (SL1, SL2) wherein
b1) the inner flushing air current (SL2) flows around the surface region (FF) penetrated by the measuring ray (MS) on the radiating device or receiving device (MSK, SO; MEK, MO) directed in each case from the edge to the centre and
b2) the outer flushing air current (SL1) in the region of the surface region (FF) penetrated in each case by the measuring ray (MS) escapes directly into the atmosphere, generating a low pressure.

**2.** A device according to claim 1, characterised in that the second means contain an air guiding cap (LK), which at least partially envelops the surface region (FF), penetrated in each case by the measuring ray (MS), of the radiating device or the receiving device (MSK,MEK) so that the inner flushing air current (SL2) is guided as part of the in-flowing flushing air current (SL) as far as possible radially symmetrically from the edge region to the centre of the surface region (FF) and flows off from there around the axis (OA) of the measuring ray (MS).

**3.** A device according to claim 2, characterised in that the air guiding cap (LK) forms a rotationally symmetric hollow flow body, which as far as possible is arranged symmetrically to the axis (OA) of the measuring ray and is narrowed preferably annularly on one side facing way from the supply of the inner flushing air current (SL2).

4. A device according to one of the preceding claims, characterised in that the second means contain an air guiding sleeve (SLH), which in each case envelops at least the radiating device or receiving device (SO, MO), so that the flushing air current (SL) is supplied from behind in the direction of the surface region (FF) penetrated by the measuring ray (MS).

5. A device according to claim 4, characterised in that the air guiding sleeve (SLH) forms a rotationally symmetric hollow flow body and as far as possible is arranged symmetrically to the axis (OA) of the measuring ray (MS).

6. A device according to one of the preceding claims, characterised in that the first means contain a ventilator (V, VF, VM) attached behind the radiating device or receiving device (MSK,SO;MEK,MO).

7. A device according to one of the preceding claims with a measuring tube (MR), to which is supplied the flue gas (RS) by way of a probe (TS, VS) preferably in the tube centre, characterised in that the radiating device and the receiving device are attached directly in each case to an outlet end (AE1, AE2) of the measuring tube (MR) so that the flue gas flow (RS) is directed as far as possible onto the centre of the surface region (FF) penetrated by the measuring ray (MS).

8. A device according to one of claims 4 to 6 with a measuring tube (MR), to which the flue gas (RS) is supplied by way of a probe (TS, VS) preferably in the tube centre, characterised in that the radiating device and the receiving device are attached directly onto in each case an outlet end (AE1, AE2) of the measuring tube (MR) so that the flue gas flow (RS) is directed as far as possible onto the centre of the surface region (FF) penetrated by the measuring ray (MS) and in that the respective air conducting sleeve (SLH) comprises the facing outlet end (AE1, AE2) of the measuring tube (MR), extended preferably in a funnel-shaped manner (HE) and forming a direct flue gas outlet (RA) into the atmosphere.

9. A use of the device according to one of the preceding claims for measuring the particle emission into the exhaust gases of combustion engines working according to the diesel principle.

## Revendications

1. Dispositif pour mesurer la turbidité d'un gaz de fumée, comportant un dispositif d'émission de rayonnement (MSK, SO) pour produire un rayonnement de mesure (MS) traversant le courant de gaz de fumée (RS), un dispositif de réception (MEK, MO) pour évaluer l'affaiblissement du faisceau de mesure (MS), provoqué par la turbidité du gaz de fumée, le dispositif d'émission de rayonnement ainsi que le dispositif de réception contenant :
   a) des premiers moyens (V) pour produire un courant d'air de balayage (SL), qui est envoyé à partir de l'arrière sur le dispositif d'émission de rayonnement et sur le dispositif de réception (MSK, MEK), en direction de l'élément de surface (FF) respectivement traversé par le rayonnement de mesure (MS), et
   b) des seconds moyens (LK, SLH, HE) pour subdiviser le courant d'air de balayage (SL) en des courants intérieur et extérieur d'air de balayage (SL1, SL2),
      b1) le courant intérieur d'air de balayage (SL2) circulant autour de l'élément de surface (FF), traversé par le faisceau de mesure (OMS), en étant dirigé respectivement à partir du bord en direction du dispositif d'émission de rayonnement et du dispositif de réception (MSK, SO; MEK, MO), et
      b2) le courant extérieur d'air de balayage (SL1) s'évacue directement dans l'atmosphère en produisant une dépression au niveau de l'élément de surface (FF) traversé respectivement par le faisceau de mesure (MS).

2. Dispositif suivant la revendication 1, caractérisé par le fait que les seconds moyens contiennent un capot (LK) de guidage de l'air, qui entoure au moins partiellement l'élément de surface (FF) traversé respectivement par le faisceau de mesure (MS), du dispositif d'émission de rayonnement et du dispositif de réception (MSK, MEK), de sorte que le courant intérieur d'air de balayage (SL2) est dévié avec une symétrie radiale aussi grande que possible, en tant que partie du courant d'air de balayage arrivant (SL), depuis la zone marginale en direction du centre de l'élément de surface (FF), et s'évacue en circulant en cet endroit autour de l'axe (OA) du faisceau de mesure (MS).

3. Dispositif suivant la revendication 2, caractérisé par le fait que le capot (LK) de guidage de l'air forme un corps creux d'écoulement à symétrie de révolution, qui est disposé d'une manière aussi symétrique que possible par rapport à l'axe (OA) du faisceau de mesure et se rétrécit de préférence avec une forme annulaire sur un côté, tourné à l'opposé de l'arrivée du courant intérieur d'air de balayage (SL2).

4. Dispositif suivant l'une des revendications précédentes, caractérisé par le fait que les seconds moyens contiennent un manchon (SLH) de guidage de l'air, qui englobe respectivement au moins le dispositif d'émission de faisceau et le dispositif de réception (S0, M0), de sorte que le courant de l'air de balayage (SL) est envoyé à partir de l'arrière en direction de l'élément de surface (FF) traversé par le faisceau de mesure.

5. Dispositif suivant la revendication 4, caractérisé par le fait que le manchon (SLH) de guidage de l'air forme un corps creux d'écoulement à symétrie de révolution et est disposé d'une manière aussi symétrique que possible par rapport à l'axe (OA) du faisceau de mesure (MS).

6. Dispositif suivant l'une des revendications précédentes, caractérisé par le fait que les premiers moyens comprennent un ventilateur (V;VF,VM) monté en arrière du dispositif d'émission de rayonnement et du dispositif de réception (MSK,SO; MEK,MO).

7. Dispositif suivant l'une des revendications précédentes comportant un tube de mesure (MR), auquel le gaz de fumée (RS) est envoyé au moyen d'une sonde (TS,VS) de préférence au centre du tube, caractérisé par le fait que le dispositif d'émission de rayonnement et le dispositif de réception sont disposés directement à côté d'une extrémité respective de sortie (AE1,AE2) du tube de mesure (MR), de sorte que le courant de gaz de fumée (RS) est dirigé autant que possible vers le centre de l'élément de surface (FF) traversé par le faisceau de mesure (MS).

8. Dispositif suivant l'une des revendications 4 à 6, comportant un tube de mesure (MR), auquel le gaz de fumée (RS) est envoyé par l'intermédiaire d'une sonde (TS,VS) de préférence au centre du tube, caractérisé par le fait que le dispositif d'émission de rayonnement et le dispositif de réception sont disposés à proximité directe d'une extrémité respective de sortie (AE1, AE2) du tube de mesure (MR) de sorte que le courant de gaz de fumée (RS) est dirigé autant que possible au centre de l'élément de surface (FF) traversé par le faisceau de mesure (MS), et que le manchon respectif de guidage (SLH) élargit de préférence en forme de trémie (HE) l'extrémité associée de sortie (AE1, AE2) du tube de mesure (MR) et l'entoure en formant une sortie directe (RA) du gaz de fumée dans l'atmosphère.

9. Utilisation du dispositif suivant l'une des revendications précédentes pour la mesure de l'émission de particules dans le gaz de fumée de moteurs à combustion interne fonctionnant selon le principe diesel.

FIG 1

FIG 2

FIG 3

FIG 4

FIG 5